# EUROPEAN PATENT SPECIFICATION

(11) **EP 1 483 116 B1**
(45) Date of publication and mention of the grant of the patent: **04.01.2006**
(21) Application number: 03744098.9
(22) Date of filing: 07.02.2003
(51) Int. Cl.: B32B 27/32, B65D 65/40

(54) **LAMINATE FOR IMPROVED BONDING**
LAMINAT FÜR VERBESSERTE BINDUNG
LAMINE POUR UNE ADHESION AMELIOREE

(30) Priority: 04.03.2002 US 361298 P; 07.02.2003 US 359561
(43) Date of publication of application: 08.12.2004
(73) Proprietor: INTERNATIONAL PAPER COMPANY, Loveland, OH 45150 (US)
(72) Inventor: BUSHMAN, Alexander, Craig, Loveland, OH 45140 (US); MARCHMAN, James, Irvin, Cincinnati, OH 45245 (US)
(74) Representative: Schneider, Michael
(86) International application number: PCT/US2003/002672
(87) International publication number: WO 2003/076186

(56) References cited:
- DE-A- 3 324 830

## Description

### Field of the Invention

This invention relates to paperboard laminate structures that have an improved heat seal to hot melt adhesive. The laminate structure contains an inorganic filler loaded into a polyolefin to increase the heat transfer and bond strength of the hot melt adhesive to the laminate substrate at lower temperatures than the polyolefin alone.

### BACKGROUND OF THE INVENTION

Numerous coatings have been applied to paperboard substrates to provide composite materials that may be used for various purposes. In particular, polyethylene coatings have been applied to paperboard substrates as a heat sealant layer for use in the construction of paperboard containers. In certain applications, it is desirable to use hot melt adhesives (also called hot melt glues) to bond together multiple surfaces. Examples of such applications include the placement of a handle onto the sidewall of the container or the combination of multiple containers together for sale as a single unit (commonly referred to as a "multipak").

In these applications, it is important that the seal (or bond) quality of the paperboard substrate to the adjoining material (via the hot melt adhesive) be strong. Failure of the seal can result in separation of the containers during the shipment to the customer or separation of the handle from the package during lifting. As a quality control check, one typically evaluates the seal by tearing samples and determining the percentage of fiber tear within the seal area. Less than 100% fiber tear indicates an insufficient seal to ensure that the multipak units or handle elements stay attached during shipment and use by the consumer.

Existing commercial materials that are used to produce paperboard substrates of this type use polyethylene alone. While polyethylene coating alone can be effective as a bonding substrate, failures in the field can occur if proper setup of the hot melt application is not ensured. Common root causes for these failures include insufficient hot melt adhesive temperature, incorrect amount (or reduced quantity) of adhesive applied to the surface, and incorrect selection of the specific grade of hot melt adhesive used. Solutions for these issues include increasing amount of hot melt adhesive applied to the glue area and/or increasing temperature of the hot melt adhesive and/or changing the hot melt adhesive. Although these methods improve the seal quality, they are typically not preferred because they require multiple inventories of hot melt adhesives depending on the application, increased usage of hot melt adhesive which increases cost, or modification to the hot melt applicator to allow higher temperatures. In addition, increasing the temperature of the hot melt adhesive can cause degradation (smoking and black specs).
DE-A-33 24 830 discloses a laminate comprising a paperboard, a polyolefin layer containing an inorganic filler, which is coated on to the exterior surface of the paperboard and a hot melt adhesive applied to the polyolefin layer. The polyolefin layer may further contain an inorganic filler.

It is therefore an object of this invention to provide a material which can offer an improved sealing and bonding substrate for hot melt adhesives which overcomes these problems.

Filled polyolefins are well known in extrusion coating. Common uses for fillers within polymers include modification of the surface smoothness, coefficient of friction, improved heat seal during self-adhesion, surface free energy, and improved coating-to-substrate adhesion during extrusion coating (such as polyethylene to paperboard). No reference is made in the existing art to the use of filled polymers to improve the bond of hot melt adhesive to filled polymers.

### SUMMARY OF THE INVENTION

A preferred embodiment of the invention reveals a filled polyolefin(polyethylene) laminate material which provides improved bonding performance to hot melt adhesives over existing polyolefin(polyethylene) substrates.

### BRIEF DESCRIPTION OF THE FIGURES

**Figure 1** is a cross-sectional representation of a preferred embodiment of the laminate of the present invention; and

**Figure 2** is a cross-sectional representation of an additional preferred embodiment of the laminate of the present invention.

### DETAILED DESCRIPTION OF THE INVENTION

A laminate structure is disclosed which improves bonding performance to hot melt adhesives over existing polyolefin(polyethylene) substrates. Uses for this invention include the application of handles to containers produced with coated paperboard and the combination of multiple containers into a single unit (a multipak). Other uses for this technology are contemplated and those skilled in the art would be able to ascertain and incorporate same. All weights are expressed in pounds per 3000 square feet.

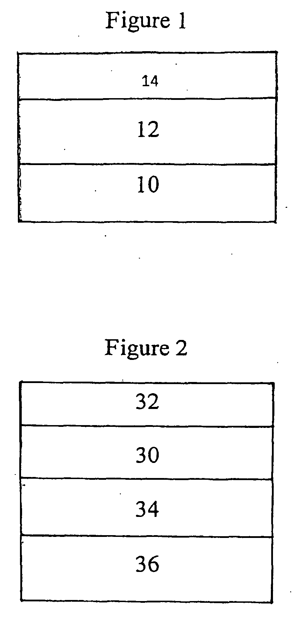

Referring to Figure 1, the preferred structure **5** contains a paperboard substrate **10** (1-300 lbs) to which is applied on one side a coating of polyolefin polymer layer **12** at a coating weight of 5-40 lbs and preferably about 12 lbs which contains an inorganic filler material. The filler can be, but is not limited to, calcium carbonate, titanium dioxide, talc, clay, carbonaceous earth, glass beads, pigments, or other inorganic material. The loading of filler can range from 1 - 40%, with a preferred amount of 15%. And a hot melt adhesive **14** is then applied to the polyolefin containing filler layer **12.**

Referring to Figure 2, an alternative preferred structure **25** contains a paperboard substrate **30** (1-300 lbs) to which is applied on one side a coating of a polymer **32.** This coating can include a monolayer extrusion or coextrusion of multiple layers prior to an overcoat of layer **34.** Layer **34** is a polyolefin material at a coating weight of 5-40 lbs and preferably about 12 lbs which contains an inorganic filler material. The high heat capacity filler material can be, but is not limited to, calcium carbonate, titanium dioxide, talc, clay, carbonaceous earth, glass beads, and pigments. The loading of filler can range from 1 - 40% by weight, with a preferred amount of 15%. And a hot melt adhesive **36** is then applied to the polyolefin containing filler layer **34.**

The polyolefin used in layer **12** or layer **34** can be, but is not limited to, low density polyethylene, linear low density polyethylene, high density polyethylene, polypropylene, and blends thereof.

### Example:

A container was produced using a structure consistent with the format of laminate **5** in Figure 1. The laminate included a 212 lbs/3msf basis weight paperboard material coated with 12 lbs/3msf of polyethylene blended with 15% loading by weight of calcium carbonate. In addition, the opposing surface of the structure was a combination of barrier materials and polyethylene. No difficulties were encountered during the production of the filled polyethylene layer via extrusion coating. Rollstock was converted into skived liter gable top cartons. A commercially available carton which did not contain calcium carbonate was also tested.

A Barber Colman heat seal testing machine was used to evaluate the self sealing nature of the construction. The Barber Colman uses two heated jaws to heat through the sample to raise the interface temperature to allow a heat seal to be made. After heating to the indicated temperature for 30 seconds, the samples are removed and then allowed to cool.

Heat seal for polymer materials are typically reported as hot tack (molten polymers placed into contact and then separated) or as heat seal strength (force required to separate samples following cooling). In paperboard applications the bond quality is rated as a function of the percent fiber tear of the paperboard because the board fibers separate prior to the polymer separation at the interface.

Bond quality is judged by grading the level of fiber tear within the seal area (as a percentage of the seal area). The results of this testing are compiled in Table 1. The comparison demonstrates that polyethylene loaded with 15% by weight calcium carbonate reduces the temperature required to achieve a 100% fiber tear seal by 20°F (11.1°C) compared control sample which did not include a filler. This is significant in that increasing the temperature of the hot melt adhesive is not required to achieve a seal when the filler is used.

| **Table 1: Laminate-to-self heat seal** | Temperature (°F/°C) required to achieve 100% fiber tear |
|---|---|
| Control - Eastman 1924p polyethylene | 210 / 98.9 |
| Trial - 15% by weight CaC03 loaded Eastman 1924p polyethylene | 190 / 87.8 |

**Table 1** is a comparison of the laminate-to-laminate heat seal of the invention compared to several other polyethylene materials.

In addition to the testing described above, these samples were evaluated using a commercial multipak device which applies hot melt adhesive to the substrate to bond the substrate to a paperboard overwrap which holds together multiple containers. For the purposes of this testing, the hot melt was allowed to cool prior to separation and determination of bond quality (as measured by percent fiber tear). The results of this testing for a variety of samples are shown in Table 2 at two different temperatures.

| **Table 2: Laminate-to-hot melt adhesive seal** | Percent Fiber Tear, % |
|---|---|
| ***Hot Melt Adhesive Temperature 350°F*/*177°C*** | |
| Control - Eastman 1924p polyethylene | 10 - 20 |
| Trial - 15% by weight CaCO3 loaded Eastman 1924p polyethylene | 100 |
| | |
| ***Hot Melt Adhesive Temperature 365°F* / *185°C*** | |
| Control - Eastman 1924p polyethylene | 50 - 80 |
| Trial B1, 15% CaCO3 loaded polyethylene, Varnished, printed | 100 |

**Table 2** is a comparison of the laminate-to-hot melt adhesive of the invention compared to several other polyethylene materials.

These results demonstrate that large variation in bond performance (percent fiber tear) is observed in the control. In addition, although increasing the temperature of the hot melt adhesive did improve the seal performance, it was not commercially acceptable. In contrast, the substrates produced using polyethylene loaded with 15% by weight calcium carbonate demonstrated 100% fiber tear.

While the preferred embodiments of the carton structure in accordance with the disclosed invention have been described, it will be obvious to those skilled in the art that modifications, additions, and deletions may be made without departing from the scope of the invention as defined in the following claims.

## Claims

1. A laminate comprising:
a) a paperboard substrate having an exterior and an interior surface;
b) a layer of a polyolefin containing an inorganic filler coated onto the exterior surface of the paperboard substrate; and
c) a hot melt adhesive applied to the polyolefin containing the inorganic filler.

2. The laminate as claimed in claim 1, wherein the polyolefin is low density polyethylene, linear low density polyethylene, high density polyethylene, polypropylene, or blends thereof.

3. The laminate as claimed in claim 1, wherein the inorganic filler is calcium carbonate, titanium dioxide, talc, clay, carbonaceous earth, glass beads, or pigments.

4. The laminate as claimed in claim 3, wherein the inorganic filler ranges from 1 to 40 weight % of the polyolefin containing inorganic filler layer.

5. The laminate as claimed in claim 3, wherein the inorganic filler is 15 weight % of the polyolefin containing inorganic filler layer.

6. The laminate as claimed in claim 1, further comprising at least one other polyolefin coated onto the interior side of the paperboard substrate prior to coating of polyolefin containing the inorganic filler.

## Patentansprüche

1. Laminat mit:
a) einem Pappe-Substrat mit einer äußeren und einer inneren Oberfläche;
b) einer Schicht eines Polyolefins, das einen anorganischen Füllstoff enthält und auf der äußeren Oberfläche des Pappe-Substrats geschichtet ist; und
c) einem Schmelzklebstoff, der auf dem Polyolefin aufgebracht ist, das den anorganischen Füllstoff enthält.

2. Laminat nach Anspruch 1, bei dem das Polyolefin ein Polyethylen niedriger Dichte, ein lineares Polyethylen niedriger Dichte, ein Polyethylen hoher Dichte, Polypropylen oder Mischungen davon ist.

3. Laminat nach Anspruch 1, bei dem der anorganische Füllstoff Calciumcarbonat, Titandioxid, Talk, Ton, kohlenstoffhaltige Erde, Glaskügelchen oder Pigmente ist.

4. Laminat nach Anspruch 3, bei dem der anorganische Füllstoff von 1 bis 40 Gew-% der Schicht aus Polyolefin, das den anorganischen Füllstoff enthält, ausmacht.

5. Laminat nach Anspruch 3, bei dem der anorganische Füllstoff 15 Gew-% der Schicht aus Polyolefin, das den anorganischen Füllstoff enthält, ausmacht.

6. Laminat nach Anspruch 1, weiter umfassend mindestens ein anderes Polyolefin, das auf der inneren Seite des Pappe-Substrates vor dem Beschichten mit dem Polyolefin, das den anorganischen Füllstoff enthält, geschichtet ist.

## Revendications

1. Laminé comprenant :
a) un substrat en carton ayant une surface extérieure et une surface intérieure ;
b) une couche d'une polyoléfine contenant une charge de remplissage inorganique enduite sur la surface extérieure du substrat en carton ; et
c) un adhésif à chaud appliqué sur la polyoléfine contenant la charge de remplissage inorganique.

2. Laminé tel que revendiqué dans la revendication 1, dans lequel la polyoléfine est du polyéthylène à basse densité, du polyéthylène à basse densité linéaire, de polyéthylène à haute densité, du polypropylène ou des mélanges de ceux-ci.

3. Laminé tel que revendiqué dans la revendication 1, dans lequel la charge de remplissage inorganique est du carbonate de calcium, du dioxyde de titane, du talc, de l'argile, de la terre charbonneuse, des billes de verre ou des pigments.

4. Laminé tel que revendiqué dans la revendication 3, dans lequel la charge de remplissage inorganique est comprise entre 1 et 40 % en poids de la couche de polyoléfine contenant la charge de remplissage inorganique.

5. Laminé tel que revendiqué dans la revendication 3, dans lequel la charge de remplissage représente 15 % en poids de la couche de polyoléfine contenant la charge de remplissage inorganique.

6. Laminé tel que revendiqué dans la revendication 1, comprenant en outre au moins une autre polyoléfine enduite sur le côté intérieur du substrat en carton avant l'enduction de la polyoléfine contenant la charge de remplissage inorganique.
